# EUROPEAN PATENT APPLICATION

(11) **EP 4 470 990 A1**
(43) Date of publication of application: **04.12.2024**
(21) Application number: 22923007.3
(22) Date of filing: 17.02.2022
(51) Int. Cl.: C04B 35/443, C04B 35/622, C04B 35/645

(54) **METHOD FOR PREPARING HIGH-DENSITY MAGNESIA-ALUMINA SPINEL CERAMIC BY LOW-TEMPERATURE PRESSURELESS SINTERING**

(30) Priority: 26.01.2022 CN 202210094788
(71) Applicant: Shanghai Institute of Ceramics, Chinese Academy of Sciences, Shanghai 200050 (CN)
(72) Inventor: ZHANG, Jian, Shanghai 200050 (CN); LIU, Mengwei, Shanghai 200050 (CN); HAN, Dan, Shanghai 200050 (CN); LI, Gui, Shanghai 200050 (CN); ZHAO, Jin, Shanghai 200050 (CN); WANG, Shiwei, Shanghai 200050 (CN)
(74) Representative: Leinweber & Zimmermann
(86) International application number: PCT/CN2022/076653
(87) International publication number: WO 2023/142185

(57) **Abstract**

A method for preparing high-density magnesia-alumina spinel ceramic by low-temperature pressureless sintering, comprises: using MgAl₂O₄ powder as a raw material powder, adding calcium phosphate as a sintering aid and controlling the calcium element of the calcium phosphate to not exceed 500 ppm of the total mass of the raw material powder; and then performing pressureless sintering, thereby preparing a high-density magnesia-alumina spinel ceramic; the pressureless sintering includes normal pressure sintering or vacuum sintering.

## Description

### TECHNICAL FIELD

The present invention relates to a transparent spinel ceramic, a non-transparent spinel ceramic and a preparation method thereof, and specifically relates to a sintering aid for reducing a pressureless sintering temperature of the magnesia-alumina spinel ceramic, and particularly relates to a method for preparing high-density magnesia-alumina spinel ceramic by low-temperature pressureless sintering, belonging to the technical field of ceramics.

### BACKGROUND

Spinel ceramic is one of the widely used materials in the field of traditional refractory materials, and has excellent mechanical properties, corrosion resistance, and high temperature resistance. Transparent spinel ceramic not only possesses the excellent properties mentioned above, but also exhibits excellent optical properties. Transparent spinel ceramic has high transmittance in the wavelength range from ultraviolet to mid-infrared light, making it widely used in many fields such as transparent armor, infrared fairing, surface acoustic wave filters, smartphone panels, camera protection windows, and high-energy laser emission windows.

However, in order to obtain a desired density, the preparation of the transparent spinel ceramic requires a higher sintering temperature, which often leads to significant energy losses and many limitations suffered by existing advanced sintering methods. Moreover, existing magnesia-alumina spinel ceramic is prone to cause abnormal grain growth during sintering, and thus affecting various properties of the ceramic material, which mainly includes a mechanical and an optical property.

For non-transparent magnesia-alumina spinel ceramic, the mechanical property is the most concerned property in various application scenarios. Therefore, it is crucial to suppress the grain growth of the magnesia-alumina spinel ceramic and improve its mechanical property. For transparent magnesia-alumina spinel ceramic, both mechanical and optical properties have received high attention. Therefore, obtaining a transparent magnesia-alumina spinel ceramic with a small grain size and an excellent optical property is an important trend in current development.

### TECHNICAL PROBLEM

Adding sintering aids to a magnesia-alumina spinel ceramic raw material is a common means to promote sintering, reduce a sintering temperature, inhibit grain growth, and achieve better mechanical, optical, and high temperature properties. Over the years, a variety of sintering aids such as CaO, CaCO₃, LiF, B₃O₂, MgF₂/AlF₃, TiO₂, V₅O₂, Cr₂O₃, Y₂O₃, MnO₂, ZrO₂, CoCO₃, and so on have been developed and used to reduce the sintering temperature of the magnesia-alumina spinel ceramic, which have shown a certain effect. At the same time, there are also some sintering aids that can provide an effective assistance for improving the transmittance of the transparent ceramic. However, in general, these sintering aids also have some shortcomings to a greater or lesser extent. Some sintering aids have no significant effect in reducing the sintering temperature. Some sintering aids may react with the raw material to generate impurities (for example, CaO or CaCO₃ reacts with magnesia-alumina spinel to form CaAl₄O₇ phase). Some sintering aids require a higher content to be added, affecting the intrinsic properties of the ceramic material.

Therefore, developing a novel sintering aid that can be used to reduce the sintering temperature of the magnesia-alumina spinel ceramic, slow down its grain growth, and obtain a magnesia-alumina spinel ceramic with an excellent mechanical and a high temperature property, is of great value for obtaining a transparent magnesia-alumina spinel ceramic with excellent mechanical, high temperature, and optical properties.

### TECHNICAL SOLUTION

Regarding the above issues, a first aspect of the present invention provides a method for preparing a high-density magnesia-alumina spinel ceramic by low-temperature pressureless sintering, comprising using MgAl₂O₄ powder as a raw material powder, adding calcium phosphate as a sintering aid and controlling calcium element of the calcium phosphate to be not higher than 500 ppm of the total mass of the raw material powder, and then performing pressureless sintering to achieve the preparation of the high-density magnesia-alumina spinel ceramic. Preferably, the composition of the calcium phosphate includes at least one of Ca₁₀(PO₄)₆(OH)₂, Ca₃(PO₄)₂, Ca₄O(PO₄)₂, Ca_{10-X}H_{2X}(PO₄)₆(OH)₂, Ca₈H₂(PO₄)_{6.5}H₂O, CaHPO₄·2H₂O, CaHPO₄, Ca₂P₂O₇, CaP₂O₇·2H₂O, Ca₇(P₅O₁₆)₂, Ca₄H₂P₆O₂₀, Ca(H₂PO₄)₂·H₂O, and Ca(PO₃)₂. The pressureless sintering is atmospheric pressure sintering or vacuum sintering.

In a second aspect, the present invention also provides a method for preparing the high-density magnesia-alumina spinel ceramic by low-temperature pressureless sintering, comprising: using MgO powder and Al₂O₃ powder as raw material powder, adding calcium phosphate as a sintering aid and controlling calcium element of the calcium phosphate to be not higher than 500 ppm of the total mass of the raw material powder, and then performing pressureless sintering to achieve the preparation of the high-density magnesium aluminum spinel ceramic. Preferably, the composition of calcium phosphate comprises at least one of Ca₁₀(PO₄)₆(OH)₂, Ca₃(PO₄)₂, Ca₄O(PO₄)₂, Ca_{10-X}H_{2X}(PO₄)₆(OH)₂, Ca₈H₂(PO4)_{6.5}H₂O, CaHPO₄·2H₂O, CaHPO₄, Ca₂P₂O₇, CaP₂O₇·2H₂O, Ca₇(P₅O₁₆)₂, Ca₄H₂P₆O₂₀, Ca(H₂PO₄)₂·H₂O, and Ca(PO₃)₂. The pressureless sintering is atmospheric pressure sintering or vacuum sintering.

Preferably, the pressureless sintering temperature is reduced by 40 °C to 200 °C compared to the pressureless sintering densification temperature without adding the calcium phosphate. Compared to without adding the calcium phosphate sintering aid, the pressureless sintering temperature of the method described in the present invention, which achieves the same sintering effect under completely identical other processes, can be reduced. Specifically, the pressureless sintering temperature is reduced by 40 °C to 220 °C, preferably 70 °C to 220 °C, and most preferably 100 °C to 220 °C, which achieves a preparation of a magnesium aluminum spinel ceramic with an open porosity of not higher than 1%. Compared to adding CaO or CaCO₃ as a sintering aid, the pressureless sintering temperature of the method described in the present invention, which achieves the same sintering effect under completely identical other processes, can be reduced. Specifically, the pressureless sintering temperature is reduced by 20 °C to 220 °C, preferably 40 °C to 220 °C, which achieves a preparation of a magnesium aluminum spinel ceramic with an open porosity of not higher than 1%.

Preferably, the pressureless sintering temperature is 1,360 °C to 1,460 °C; and the pressureless sintering time is not higher than 20 hours.

Preferably, the method comprising: before pressureless sintering, subjecting the raw material powder to forming to a green body; the forming method is dry molding or/and wet molding.

Preferably, the molar ratio of the MgO powder to Al₂O₃ powder is 1 : (0.98 to 2.2).

In a third aspect, the present invention provides the magnesia-alumina spinel ceramic prepared by the method of preparing high-density magnesia-alumina spinel ceramic by low-temperature pressureless sintering. The density of the magnesia-alumina spinel is higher than 90%, and the open porosity is not higher than 1%.

In a fourth aspect, the present invention provides a preparation method of the magnesia-alumina spinel transparent ceramic, comprising: subjecting the magnesia-alumina spinel ceramic prepared above to hot isostatic pressing to obtain a transparent magnesia-alumina spinel ceramic.

Preferably, the hot isostatic pressing sintering temperature is 1,350 °C to 1,800 °C; the hot isostatic pressing sintering pressure is 50 MPa to 200 MPa; and the hot isostatic pressing sintering time is not higher than 20 hours.

In a fourth aspect, the present invention provides a transparent magnesia-alumina spinel ceramic prepared according to the above preparation method.

In the present invention, the obtained transparent magnesia-alumina spinel ceramic does not have visible defects, and the ceramic with a thickness greater than or equal to 3 mm has a transmittance of higher than 70%, preferably higher than 80%, and more preferably higher than 85% when measured in the wavelength range from 200 nm to 2,500 nm.

### BRIEF DESCRIPTION OF DRAWINGS

Fig. 1 shows scanning electronic microscopy (SEM) images and energy dispersive spectroscopy (EDS) images of a pre-sintered magnesia-alumina spinel ceramic body (pressureless sintering temperature: 1,360 °C) with a sintering additive content of 450 ppm;
Fig. 2 shows an X-ray diffraction pattern (XRD) of pre-sintered magnesia-alumina spinel ceramic bodies (pressureless sintering temperature: 1,400 °C) with calcium content of 0 ppm, 350 ppm, and 15,000 ppm of the sintering aids, respectively.

### DETAILED DESCRIPTION OF PREFERRED EMBODIMENTS

The present invention will be further illustrated by the following examples below, and it should be understood that the following examples are only used to illustrate the present invention rather than to limit it.

In the present invention, a sintering aid with a calcium element content of less than or equal to 500 ppm is introduced in the preparation of a magnesia-alumina spinel ceramic (e.g., 25 ppm, 50 ppm, 75 ppm, 100 ppm, 150 ppm, 200 ppm, 250 ppm, 300 ppm, 350 ppm, 400 ppm, 450 ppm, 500 ppm, etc.) to achieve low-temperature sintering densification of a magnesia-alumina spinel ceramic. Wherein, the calcium element exists in the form of calcium phosphate. The calcium phosphate composition includes Ca₁₀(PO₄)₆(OH)₂ or Ca₃(PO₄)₂, which may also be other form of calcium phosphate with other Ca/P ratio, including Ca₄O(PO₄)₂, Ca_{10-X}H_{2X}(PO₄)₆(OH)₂, Ca₈H₂(PO4)_{6.5}H₂O, CaHPO₄·2H₂O, CaHPO₄, Ca₂P₂O₇, CaP₂O₇·2H₂O, Ca₇(P₅O₁₆)₂, Ca₄H₂P₆O₂₀, Ca(H₂PO₄)₂·H₂O, and Ca(PO₃)₂, etc.

According to the present invention, a magnesia-alumina spinel ceramic can be prepared from a (phase formed) magnesia-alumina spinel powder as a raw material, or can be prepared from a raw material including magnesium oxide powder and alumina oxide powder by reaction sintering. The above involved variation in the preparation method does not affect the implementation of the present invention. The adjustment of particle size of the magnesium-aluminum spinel as raw material powder before sintering does not affect the implementation of the present invention.

According to the present invention, the preparation of the magnesia-alumina spinel ceramic may be achieved through dry molding methods such as direct dry press molding, cold isostatic pressing molding, as well as wet molding methods such as gelcasting, slipcasting, tape casting, press-assisted injection molding, filtration pressing, without affecting the implementation of the present invention. The subsequent steps are related to the discharge process. The discharge temperature may be 300 °C to 800 °C, and the discharge time may be 0 to 10 hours.

According to the present invention, the adjustment of the forming process during dry molding and cold isostatic pressing does not affect the implementation of the present invention. The adjustment such as includes a treatment on the raw material powder, including subjecting calcination, granulation, cleaning to the raw material powder, etc., and the adjustment of the forming pressure.

According to the present invention, the adjustment of the forming process during wet forming process does not affect the implementation of the present invention. The adjustment may include the adjustment of the type and content of the dispersant, the solid content of the slurry, and a curing temperature and a curing time.

According to the present invention, in the preparation method of the spinel ceramic, calcium element is introduced during the preparation of the ceramic slurry or formula.

According to the present invention, in the preparation method of the spinel ceramic, the decrease in sintering temperature includes a decrease of below 220 °C in pressureless sintering temperature. At the same time, the subsequent hot isostatic pressing sintering temperature is also reduced. In the present invention, adjusting the content of calcium element of the sintering aid and the pressureless sintering temperature, a magnesia-alumina spinel ceramic with a relative density of higher than 90% and an open porosity of not higher than 1% can be achieved.

According to the invention, the relative density of the obtained magnesia-alumina spinel ceramic is higher than 90%, and the open porosity of the obtained magnesia-alumina spinel ceramic is not higher than 1%.

Furthermore, the magnesia-alumina spinel ceramic is subjected to hot isostatic pressing sintering to obtain a transparent magnesia-alumina spinel ceramic.

The obtained transparent magnesia-alumina spinel ceramic with a thickness greater than or equal to 3 mm has a transmittance of higher than 70% when measured in the wavelength range from 300 nm to 2,500 nm.

Examples will be taken to further illustrate the present invention in detail below. It should also be understood that the following examples are only used to further illustrate the present invention rather than to limit the protection scope of the present invention. All non-essential improvements and adjustments which are made by those skilled in the art according to the above content of the present invention shall fall into the protection scope of the present invention. The specific process parameters of the following examples are merely one example in an appropriate range, that is, those skilled in the art can make choices within the appropriate range through the description herein, but the choices are not limited to the specific values of the following examples.

### Example 1 (25 ppm, 44 vol%, wet forming)

Magnesia-alumina spinel powder, deionized water, a sintering aid, and a dispersant were uniformly mixed in a ball mill for two hours to obtain a magnesia-alumina spinel ceramic slurry. Wherein, the volume proportion of the magnesia-alumina spinel powder was 44 vol%, the volume proportion of the deionized water was 56 vol%, the mass proportion of calcium element of the sintering aid (to the magnesia-alumina spinel powder) was 0.0025 wt%, and the mass proportion of the dispersant was 1.8 wt%. The particle size of the magnesia-alumina spinel powder was 250 nm. The molecular weight of the dispersant was 350. The sintering aid was Ca₃(PO₄)₂, with a particle size of 300 nm.

The prepared magnesia-alumina spinel slurry was subjected to press-assisted injection molding to obtain magnesia-alumina spinel ceramic green bodies.

The magnesia-alumina spinel ceramic green bodies were then dried and discharged. The discharge temperature was 300 °C, and the discharge time was 20 hours.

The discharged magnesia-alumina spinel ceramic bodies were pre-sintered in a muffle furnace (under air atmosphere and atmospheric pressure, the following examples and comparative examples are the same as example 1), with the pre-sintered temperatures being respectively 1,420 °C, 1,400 °C, 1,460 °C, and 1,480 °C, to give pre-sintered ceramic bodies as non-transparent spinel ceramics with relative densities of 91.6%, 93.1%, 94.5%, and 95.6%, and open porosity of 7.0%, 1.8%, 0.32%, and 0.10%, respectively.

The pre-sintered ceramic bodies were subjected to hot isostatic pressing treatment with a hot isostatic pressing temperature of 1,450 °C, a hot isostatic pressing pressure of 180 MPa, and a holding temperature time of 3 hours, to obtain transparent magnesia-alumina spinel ceramics. After testing, the transmittance of all the transparent magnesia-alumina spinel ceramics (with a thickness of 3 mm) in the wavelength range from 300 nm to 2,000 nm is higher than 80%.

### Example 2 (450 ppm, 44 vol%, wet forming)

Magnesia-alumina spinel powder, deionized water, a sintering aid, and a dispersant were uniformly mixed in a ball mill for two hours to obtain a magnesia-alumina spinel ceramic slurry. Wherein, the volume proportion of the magnesia-alumina spinel powder was 44 vol%, the volume proportion of the deionized water was 56 vol%, the mass proportion of the calcium element of the sintering aid (to the magnesia-alumina spinel powder) was 0.045 wt%, and the mass proportion of the dispersant was 1.8 wt%. The particle size of the magnesia-alumina spinel powder was 250 nm. The molecular weight of the dispersant was 350. The sintering aid was Ca₃(PO₄)₂, with a particle size of 300 nm.

The prepared magnesia-alumina spinel slurry was subjected to press-assisted injection molding to obtain magnesia-alumina spinel ceramic green bodies.

The magnesia-alumina spinel ceramic green bodies were then dried and discharged. The discharge temperature was 800 °C.

The discharged magnesia-alumina spinel ceramic bodies were pre-sintered in a muffle furnace, with the pre-sintered temperatures being respectively 1,360 °C, 1,380 °C, 1,400 °C, 1,420 °C, 1,400 °C, 1,460 °C, and 1,480 °C, to give pre-sintered ceramic bodies as non-transparent spinel ceramics, with relative densities of 90.7%, 92.3%, 93.4%, 94.2%, 95.0%, 95.0%, and 95.4%, and open porosity of 1.9%, 0.6%, 0.5%, 0.5%, 0.13%, 0.5%, and 0.4%, respectively.

The pre-sintered ceramic bodies were subjected to hot isostatic pressing treatment with a hot isostatic pressing temperature of 1,450 °C, a hot isostatic pressing pressure of 180 MPa, and a holding temperature time of 3 hours, to obtain transparent magnesia-alumina spinel ceramics. After testing, the transmittance of all the transparent magnesia-alumina spinel ceramics in the wavelength range from 200 nm to 2,000 nm is higher than 80%.

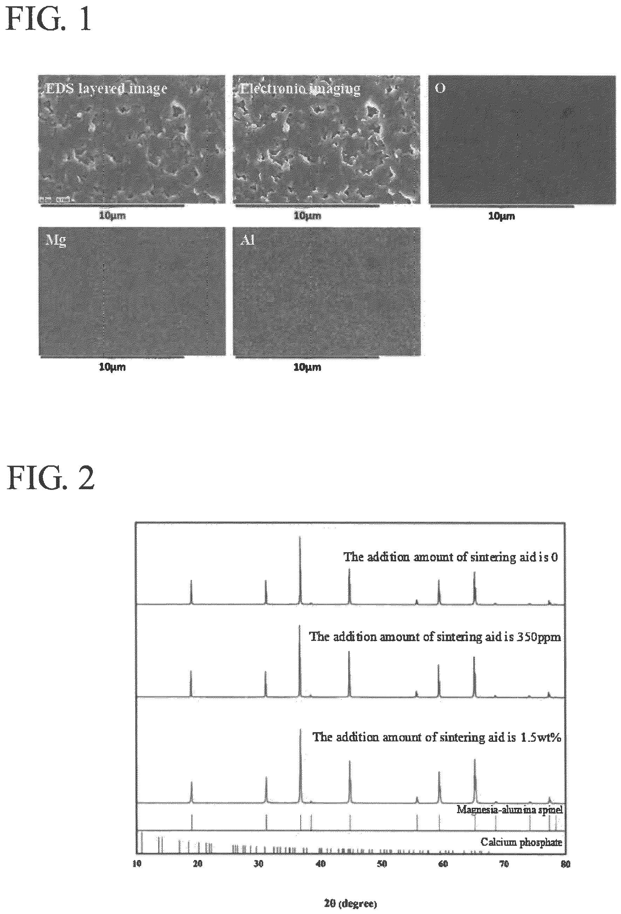

In order to verify the extremely low doping amount of the sintering aid in the present invention, scanning electron microscopy (SEM) and energy dispersive spectroscopy (EDS) were used to analyze the pre-sintered ceramic body of Example 2, which was prepared by pressureless sintering at 1,360 °C. The analysis results are shown in Fig. 1. According to the SEM microstructure images, it can be seen that no second phase substance is produced during sintering. According to the energy spectrum results, it can be indicated that the content of the doped sintering aid in the present invention is lower than the detection limit of EDS energy spectrum, only Mg, Al, and O elements can be detected, and no new substances is produced during the sintering process.

### Example 3 (350 ppm, 44 vol%, wet forming)

Magnesia-alumina spinel powder, deionized water, a sintering aid, and a dispersant were uniformly mixed in a ball mill for two hours to obtain a magnesia-alumina spinel ceramic slurry. Wherein, the volume proportion of the magnesia-alumina spinel powder was 44 vol%, the volume proportion of the deionized water was 56 vol%, the mass proportion of calcium element of the sintering aid (to the magnesia-alumina spinel powder) was 0.035 wt%, and the mass proportion of the dispersant was 1.8 wt%. The particle size of the magnesia-alumina spinel powder was 250 nm. The molecular weight of the dispersant was 350. The sintering aid was Ca₃(PO₄)₂, with a particle size of 300 nm.

The prepared magnesia-alumina spinel slurry was subjected to press-assisted injection molding to obtain magnesia-alumina spinel ceramic green bodies.

The magnesia-alumina spinel ceramic green bodies were then dried and discharged. The discharged temperature was 800 °C.

The discharged magnesia-alumina spinel ceramic bodies were pre-sintered in a muffle furnace, with the pre-sintered temperatures being respectively 1,360 °C, 1,380 °C, 1,400 °C, 1,420 °C, 1,400 °C, 1,460 °C, and 1,480 °C, to give pre sintered ceramic bodies as non-transparent spinel ceramics, with relative densities of 91.7%, 93.3%, 94.3%, 95.1%, 95.9%, 96.0%, and 96.2%, and open porosity of 0.5%, 0.5%, 0.6%, 0.4%, 0.3%, 0.6%, and 0.4%, respectively.

The pre-sintered ceramic bodies were subjected to hot isostatic pressing treatment with a hot isostatic pressing temperature of 1,350 °C, a hot isostatic pressing pressure of 180 MPa, and a holding temperature time of 6 hours, to obtain transparent magnesia-alumina spinel ceramics. After testing, the transmittance of all the transparent magnesia-alumina spinel ceramics in the wavelength range from 200 nm to 2,000 nm is higher than 80%.

### Example 4 (100 ppm, 44 vol%, wet forming)

The preparation process of the non-transparent spinel ceramics in Example 6 referred to Example 1, with the only difference being that: the mass proportion of calcium element of the added sintering additive Ca₃(PO₄)₂ (to the magnesia-alumina spinel powder) was 0.01 wt%; and the pre-sintered temperatures were respectively 1,400 °C, 1,420 °C, 1,400 °C, 1,460 °C, and 1,480 °C. The obtained ceramic pre-sintered bodies were non-transparent spinel ceramics, with relative densities of 92.0%, 95.0%, 96.9%, 97.8%, and 98.2%, and open porosity of 6.3%, 0.8%, 0.4%, 0.1%, and 0.2%, respectively.

### Example 5 (50 ppm, 44 vol%, wet forming)

The preparation process of the non-transparent spinel ceramics in Example 9 referred to Example 1, with the only difference being that: the mass proportion of calcium element of the added sintering additive Ca₃(PO₄)₂ (to the magnesia-alumina spinel powder) was 0.005 wt%; and the pre-sintered temperatures were respectively 1,400 °C, 1,420 °C, 1,400 °C, 1,460 °C, and 1,480 °C. The obtained pre-sintered ceramic bodies were non-transparent spinel ceramics, with relative densities of 91.8%, 93.6%, 94.2%, 98.1%, and 98.6%, and open porosity of 7.0%, 3.1%, 0.5%, 0.2%, and 0.2%, respectively.

### Example 6 (350 ppm, 44 vol%, wet forming)

Magnesia-alumina spinel powder, deionized water, a sintering aid, and a dispersant were uniformly mixed in a ball mill for two hours to obtain a magnesia-alumina spinel ceramic slurry. Wherein, the volume proportion of the magnesia-alumina spinel powder was 44 vol%, the volume proportion of the deionized water was 56 vol%, the mass proportion of calcium element of the sintering aid (to the magnesia-alumina spinel powder) was 0.035 wt%, and the mass proportion of the dispersant was 1.8 wt%. The particle size of the magnesia-alumina spinel powder was 250 nm. The molecular weight of the dispersant was 350. The sintering aid was Ca₁₀(PO₄)₆(OH)₂, with a particle size of 300 nm.

The prepared magnesia-alumina spinel slurry was subjected to press-assisted injection molding to obtain magnesia-alumina spinel ceramic green bodies.

The magnesia-alumina spinel ceramic green bodies were then dried and discharged. The discharged temperature was 800 °C.

The discharged magnesia-alumina spinel ceramic bodies were pre-sintered in a muffle furnace, with the pre-sintered temperatures being respectively 1,360 °C, 1,380 °C, 1,400 °C, 1,420 °C, 1,400 °C, 1,460 °C, and 1,480 °C, to give pre-sintered ceramic bodies as non-transparent spinel ceramics, with relative densities of 91.3%, 93.5%, 94.1%, 95.4%, 95.6%, 96.1%, and 96.3%, and open porosity of 0.3%, 0.1%, 0.3%, 0.6%, 0.2%, 0.3%, and 0.4%, respectively.

### Example 7 (350 ppm, dry molding)

Magnesia-alumina spinel powder, anhydrous ethanol, and a sintering aid were uniformly mixed in a ball mill for two hours to obtain a magnesia-alumina spinel ceramic slurry. Wherein, the volume proportion of the magnesia-alumina spinel powder was 10 vol%, the volume proportion of anhydrous ethanol was 90 vol%, and the mass proportion of calcium element of the sintering aid (to the magnesia-alumina spinel powder) was 0.035 wt%. The particle size of the magnesia-alumina spinel powder was 250 nm. The sintering aid was Ca₃(PO₄)₂ with a particle size of 300 nm.

The prepared magnesia-alumina spinel slurry was then dried and sieved to obtain a mixed powder raw material. The mixed powder raw material was then formed by dry pressing combining with cold isostatic pressing, with a cold isostatic pressing pressure of 200 MPa, to obtain magnesia-alumina spinel ceramic green bodies.

The magnesia-alumina spinel ceramic green bodies were discharged at 800 °C.

The discharged magnesia-alumina spinel ceramic bodies were pre-sintered in a muffle furnace, with the pre-sintered temperatures being respectively 1,360 °C, 1,380 °C, 1,400 °C, 1,420 °C, 1,400 °C, 1,460 °C, and 1,480 °C, to give pre-sintered ceramic bodies as non-transparent spinel ceramics, with relative densities of 95.8%, 97.0%, 97.5%, 98.1%, 98.4%, 98.4%, and 98.7%, and open porosity of 0.3%, 0.3%, 0.5%, 0.3%, 0.3%, 0.4%, and 0.25%, respectively.

The pre-sintered ceramic bodies were subjected to hot isostatic pressing treatment with a hot isostatic pressing temperature of 1,350 °C, a hot isostatic pressing pressure of 180 MPa, and a holding temperature time of 6 hours, to obtain transparent magnesia-alumina spinel ceramics. After testing, the transmittance of all the transparent magnesia-alumina spinel ceramics in the wavelength range from 200 nm to 2,000 nm is higher than 80%.

### Example 8 (300 ppm, reaction sintering)

MgO powder, Al₂O₃ powder (molar ratio of MgO to Al₂O₃ is 1 : 1.3), anhydrous ethanol and a sintering aid were uniformly mixed in the ball mill for two hours to obtain a magnesia-alumina spinel ceramic slurry. Wherein, the volume proportion of the magnesia-alumina spinel powder was 10vol%, the volume proportion of anhydrous ethanol was 90 vol%, and the mass proportion of calcium element of the sintering aid (to the total mass of MgO powder and Al₂O₃ powder) was 0.03 wt%. The particle size of MgO powder and Al₂O₃ powder was respectively 250 nm. The sintering aid was Ca₃(PO₄)₂, with a particle size of 300 nm.

The prepared magnesia-alumina spinel slurry was formed by dry pressing combining with cold isostatic pressing, with a cold isostatic pressing pressure of 200 MPa, to obtain magnesia-alumina spinel ceramic green bodies.

The magnesia-alumina spinel ceramic green bodies were discharged at 800 °C.

The discharged magnesia-alumina spinel ceramic bodies were pre-sintered in a muffle furnace, with the pre-sintered temperatures being respectively 1,360 °C, 1,380 °C, 1,400 °C, 1,410 °C, 1,430 °C, and 1,450 °C, to give ceramic pre-sintered bodies as non-transparent spinel ceramics, with relative densities of 90.7%, 96.1%, 97.5%, 97.5%, 98.2%, and 99.3%, and open porosity of 9.8%, 0.02%, 0.1%, 0.1%, 0.02%, and 0.07%, respectively.

The ceramic pre-sintered bodies were subjected to hot isostatic pressing treatment with a hot isostatic pressing temperature of 1,450 °C, a hot isostatic pressing pressure of 180 MPa, and a holding temperature time of 6 hours, to obtain transparent magnesia-alumina spinel ceramics. After testing, the transmittance of all the transparent magnesia-alumina spinel ceramics in the wavelength range from 200 nm to 2,000 nm is higher than 85%.

### Example 9 (500 ppm, 44 vol%, wet forming)

Magnesia-alumina spinel powder, deionized water, a sintering aid, and a dispersant were uniformly mixed in a ball mill for two hours to obtain magnesia-alumina spinel ceramic slurry. Wherein, the volume proportion of the magnesia-alumina spinel powder was 44 vol%, the volume proportion of the deionized water was 56 vol%, the mass proportion of calcium element of the sintering aid (to the magnesia-alumina spinel powder) was 0.050 wt%, and the mass proportion of the dispersant was 1.8 wt%. The particle size of the magnesia-alumina spinel powder was 250 nm. The molecular weight of the dispersant was 350. The sintering aid was Ca₃(PO₄)₂, with a particle size of 300 nm.

The prepared magnesia-alumina spinel slurry was subjected to press-assisted injection molding to obtain magnesia-alumina spinel ceramic green bodies.

The magnesia-alumina spinel ceramic green bodies were then dried and discharged. The discharge temperature was 800 °C.

The discharged magnesia-alumina spinel ceramic bodies were pre-sintered in a muffle furnace, with the pre-sintered temperatures being respectively 1,360 °C, 1,380 °C, 1,400 °C, 1,420 °C, 1,400 °C, 1,460 °C, 1,480 °C, and 1,500 °C, to give ceramic pre sintered bodies as non-transparent spinel ceramics, with relative densities of 89.1%, 90.9%, 92.2%, 91.2%, 91.3%, 93.1%, 93.7%, and 93.9%, and open porosity of 8.3%, 2.8%, 2.7%, 2.8%, 2.95%, 0.5%, 0.7%, and 0.4%, respectively.

The ceramic pre-sintered bodies were subjected to hot isostatic pressing treatment with a hot isostatic pressing temperature of 1,550 °C, a hot isostatic pressing pressure of 180 MPa, and a holding temperature time of 3 hours, to obtain transparent magnesia-alumina spinel ceramics. After testing, the transmittance of all the transparent magnesia-alumina spinel ceramics in the wavelength range from 200 nm to 2,000 nm is lower than 65%.

### Comparative Example 1 (0 ppm, dry molding)

Magnesia-alumina spinel powder and anhydrous ethanol were uniformly mixed in a ball mill for two hours to obtain a magnesia-alumina spinel ceramic slurry. Wherein, the volume proportion of the magnesia-alumina spinel powder was 10 vol% and the volume proportion of anhydrous ethanol was 90 vol%. There were no sintering aids in the slurry. The particle size of the magnesia-alumina spinel powder was 250 nm.

The prepared magnesia-alumina spinel slurry was then dried and sieved to obtain a mixed powder raw material. The mixed powder raw material was formed by dry pressing combining with cold isostatic pressing, with a cold isostatic pressing pressure of 200 MPa, to obtain magnesia-alumina spinel ceramic green bodies.

The magnesia-alumina spinel ceramic green bodies were discharged at 800 °C.

The discharged magnesia-alumina spinel ceramic bodies were pre-sintered in a muffle furnace, with the pre-sintered temperatures being respectively 1,360 °C, 1,380 °C, 1,400 °C, 1,420 °C, 1,400 °C, 1,460 °C, and 1,480 °C, to give pre-sintered ceramic bodies as non-transparent spinel ceramics, with relative densities of 77.8%, 81.1%, 83.5%, 86.4%, 88.5%, 91.3%, and 94.0%, and open porosity of 21.4%, 18.0%, 15.4%, 12.7%, 6.5%, 1.3%, and 0.2%, respectively.

The ceramic pre-sintered bodies were subjected to hot isostatic pressing treatment with a hot isostatic pressing temperature of 1,350 °C, a hot isostatic pressing pressure of 180 MPa, and a holding temperature time of 6 hours, to obtain the transparent magnesia-alumina spinel ceramics.

### Comparative Example 2 (0 ppm, reaction sintering)

MgO powder, Al₂O₃ powder (molar ratio of MgO to Al₂O₃ is 1:1.3) and anhydrous ethanol were uniformly mixed in a ball mill for two hours to obtain a magnesium-aluminum spinel ceramic slurry. Wherein, the volume proportion of the magnesium-aluminum spinel powder was 10vol%, and the volume proportion of the anhydrous ethanol was 90 vol%. The particle size of MgO powder and Al₂O₃ powder was respectively 250 nm.

The prepared magnesium-aluminum spinel slurry was formed by dry pressing combining with cold isostatic pressing, with a cold isostatic pressing pressure of 200 MPa, to obtain magnesia-alumina spinel ceramic green bodies.

The magnesium-aluminum spinel ceramic green bodies were discharged at 800 °C.

The discharged magnesia-alumina spinel ceramic bodies were pre-sintered in a muffle furnace, with the pre-sintered temperatures being respectively 1,550 °C, 1,590 °C, 1,600 °C, and 1,620 °C, to give ceramic pre-sintered bodies as non-transparent spinel ceramics, with relative densities of 87.8%, 93.1%, 93.9%, and 97.8%, respectively, and open porosity of 10.6%, 0.5%, 0.04%, and 0.09%, respectively.

### Comparative Example 3 (0 ppm, 44 vol%, wet forming)

Magnesia-alumina spinel powder, deionized water and a dispersant were uniformly mixed in a ball mill for two hours to obtain a magnesia-alumina spinel ceramic slurry. Wherein, the volume proportion of the magnesia-alumina spinel powder was 44 vol%, the volume proportion of deionized water was 56vol%, and the mass proportion of the dispersant was 1.8 wt%. There were no sintering aids in the slurry. The particle size of the magnesia-alumina spinel powder was 250 nm. The molecular weight of dispersant was 350.

The prepared magnesia-alumina spinel slurry was formed by press-assisted injection molding to obtain magnesia-alumina spinel ceramic green bodies.

The magnesia-alumina spinel ceramic green bodies were then dried and discharged. The discharge temperature was 800 °C.

The discharged magnesia-alumina spinel ceramic bodies were pre-sintered in a muffle furnace, with the pre-sintered temperatures being respectively 1,360 °C, 1,380 °C, 1,400 °C, 1,420 °C, 1,400 °C, 1,460 °C, 1,480 °C, and 1,500 °C, to give ceramic pre-sintered bodies as non-transparent spinel ceramics, with relative densities of 82.7%, 84.6%, 86.4%, 87.9%, 90.5%, 92.1%, 93.0%, and 94.2%, and open porosity of 17.1%, 14.4%, 12.7%, 10.9%, 8.7%, 1.5%, 1.6%, and 0.1%, respectively.

The ceramic pre-sintered bodies were subjected to hot isostatic pressing treatment with a hot isostatic pressing temperature of 1,650 °C, a hot isostatic pressing pressure of 180 MPa, and a holding temperature time of 3 hours to obtain transparent magnesia-alumina spinel ceramics. After testing, the transmittance of all the transparent magnesia-alumina spinel ceramics in the wavelength range from 200 nm to 2,000 nm is higher than 80%.

### Comparative Example 4

The preparation process of the non-transparent spinel ceramics in Comparative Example 4 referred to Example 6, with the only difference being that the mass proportion of calcium element of the added sintering additive CaO (to the magnesia-alumina spinel powder) was 0.010wt%, and the pre-sintered temperatures were respectively 1,360 °C, 1,380 °C, 1,400 °C, 1,420 °C, 1,400 °C, 1,460 °C, 1,480 °C, and 1,500 °C. The obtained ceramic pre-sintered bodies were non-transparent spinel ceramics, with relative densities of 82.3%, 84.2%, 85.9%, 87.8%, 89.1%, 91.2%, 92.4%, and 93.2%, respectively, and open porosity of 17.4%, 15.3%, 13.4%, 11.8%, 9.9%, 7.5%, 2.1%, and 0.3%, respectively.

### Comparative Example 5

The preparation process of the non-transparent spinel ceramics in Comparative Example 5 referred to Example 6, with the only difference being that the mass proportion of calcium element of the added sintering additive CaO (to the magnesia-alumina spinel powder) was 0.050 wt%, and the pre-sintered temperatures were respectively 1,360 °C, 1,380 °C, 1,400 °C, 1,420 °C, 1,440 °C, 1,460 °C, 1,480 °C, and 1,500 °C. The obtained ceramic pre-sintered bodies were non-transparent spinel ceramics, with relative densities of 81.7%, 83.7%, 85.3%, 87.1%, 88.6%, 90.5%, 93.0%, and 93.6%, and open porosity of 17.8%, 15.9%, 13.9%, 12.2%, 10.2%, 8.1%, 0.6%, and 0.4%, respectively.

### Proof Example (15,000 ppm, 44 vol%, wet forming)

The preparation process of the non-transparent spinel ceramics in Proof Example referred to Example 1, with the only difference being that the proportion of calcium element of the added sintering additive Ca(PO₄)₂ (to the magnesia-alumina spinel powder)was 1.5 wt%, and the pre-sintered temperature was 1,400 °C. The obtained ceramic pre-sintered body was a non-transparent spinel ceramic.

In order to verify whether the reaction between the sintering aid and the magnesia-alumina spinel in the present invention forms an impure phase, the pre-sintered ceramic body obtained in the Proof Example was tested by X-ray diffraction (XRD). The doping amount of the sintering aid is set to be 15,000 ppm, with the aim of making the content of the doped substance be higher than the detection limit of XRD, and promoting a full reaction that may occur between the sintering aid and the magnesia-alumina. The XRD pattern is shown in Fig. 2. According to the XRD pattern, it can be determined that there are only two phases of magnesia-alumina spinel and Ca₃(PO₄)₂ in the pre-sintered ceramic body. Therefore, it can be concluded that there is no reaction between the sintering aid and the magnesia-alumina spinel, and no new second phase substance is generated during sintering.

## Claims

1. A method for preparing high-density magnesia-alumina spinel ceramic by low-temperature pressureless sintering, comprising: using MgAl₂O₄ powder as a raw material powder, adding calcium phosphate as a sintering aid and controlling the calcium element of the calcium phosphate to not exceed 500 ppm of the total mass of the raw material powder; and then performing pressureless sintering, thereby preparing a high-density magnesia-alumina spinel ceramic; the pressureless sintering includes normal pressure sintering or vacuum sintering.

2. A method for preparing high density magnesia-alumina spinel ceramic by low-temperature pressureless sintering, comprising: using MgO powder and Al₂O₃ powder as a raw material powder, adding calcium phosphate as a sintering aid and controlling the calcium element of the calcium phosphate to not exceed 500 ppm of the total mass of the raw material powder; and then performing pressureless sintering, thereby preparing a high-density magnesia-alumina spinel ceramic; the pressureless sintering includes normal pressure sintering or vacuum sintering.

3. The method for preparing high-density magnesia-alumina spinel ceramic by low-temperature pressureless sintering according to claim 1 or 2, wherein the composition of the calcium phosphate comprises at least one of Ca₁₀(PO₄)₆(OH)₂, Ca₃(PO₄)₂, Ca₄O(PO₄)₂, Ca_{10-X}H_{2X}(PO₄)₆(OH)₂, Ca₈H₂(PO4)_{6.5}H₂O, CaHPO₄·2H₂O, CaHPO₄, Ca₂P₂O₇, CaP₂O₇·2H₂O, Ca₇(P₅O₁₆)₂, Ca₄H₂P₆O₂₀, Ca(H₂PO₄)₂·H₂O, and Ca(PO₃)₂.

4. The method for preparing high-density magnesia-alumina spinel ceramic by low-temperature pressureless sintering according to claim 1 or 2, wherein the pressureless sintering temperature is reduced by 40 °C to 200 °C compared to the pressureless sintering densification temperature when without adding calcium phosphate.

5. The method for preparing high-density magnesia-alumina spinel ceramic by low-temperature pressureless sintering according to claim 4, wherein the pressureless sintering temperature is 1,360 °C to 1,460 °C; and the pressureless sintering time is not higher than 20 hours.

6. The method for preparing high-density magnesia-alumina spinel ceramic by low-temperature pressureless sintering according to claim 2, wherein the molar ratio of the MgO powder to Al₂O₃ powder is 1: (0.98 to 2.2).

7. The method for preparing high-density magnesia-alumina spinel ceramic by low-temperature pressureless sintering according to claim 1 or 2, wherein the method comprising: subjecting the raw material powder to forming a green body before pressureless sintering; wherein, the forming method is dry molding and/or wet molding.

8. A magnesia-alumina spinel ceramic, wherein, the magnesia-alumina spinel ceramic is prepared by a method of preparing a high-density magnesia-alumina spinel ceramic by low-temperature pressureless sintering according to any of claims 1 to 7, wherein the density of the magnesia-alumina spinel is higher than 90% and the open porosity is not higher than 1%.

9. A preparation method of transparent magnesia-alumina spinel ceramic, wherein the preparation method comprising: subjecting a magnesia-alumina spinel ceramic of claim 8 to hot isostatic pressing sintering to obtain a transparent magnesia-alumina spinel ceramic.

10. The preparation method according to claim 9, wherein the hot isostatic pressing sintering temperature is 1,350 °C to 1,800 °C; the hot isostatic pressing sintering pressure is 50 MPa to 200 MPa; and the hot isostatic pressing sintering time is not higher than 20 hours.

11. A magnesia-alumina spinel transparent ceramic prepared by a preparation method according to claim 10.
